# EUROPÄISCHE PATENTANMELDUNG

(11) **EP 0 596 457 A2**
(43) Veröffentlichungstag der Anmeldung: **11.05.1994**
(21) Anmeldenummer: 93117743.0
(22) Anmeldetag: 02.11.1993
(51) Int. Cl.: D05C 17/02

(54) **Folienbeschichteter, recyclisierbarer Teppichboden**

(30) Priorität: 03.11.1992 DE 4237065
(71) Anmelder: HOECHST AKTIENGESELLSCHAFT, D-65929 Frankfurt am Main (DE)
(72) Erfinder: Schwarz, Gerhard, D-63456 Hanau (DE); Weber, Manfred, D-61479 Glashütten (DE)

(57) **Zusammenfassung**

Beschrieben wird ein folienbeschichteter, recyclisierbarer Teppichboden bestehend aus einem Trägermaterial, einem darin eingebundenen Polgarn, einer Verfestigungs- und Versteifungsschicht und ggf. einem Zweitrükken und ist dadurch gekennzeichnet, daß das Polgarn, das Trägermaterial und ggf. der Zweitrücken aus Polyesterfasern bestehen, und daß er als Verfestigungs- und Versteifungsschicht eine Polyesterfolie von 0,04 bis 4,0 mm Dicke aufweist, die mit der mit ihr in Berührung stehenden Trägerschicht des Teppichs in der Berührungsfläche unlösbar verschmolzen oder verschweißt ist.

Ferner wird ein Verfahren zur Herstellung des folienbeschichteten recyclisierbaren Teppichbodens beschrieben.

## Beschreibung

Die vorliegende Erfindung betrifft einen folienbeschichteten, recyclisierbaren Teppichboden aus einem Trägermaterial, einem darin eingebundenen Polgarn und einer Folienbeschichtung des Rückens, wobei das Polgarn und das Trägermaterial aus Polyesterfasern und die Rückenbeschichtung aus einer Polyesterfolie besteht.

Teppiche im Sinne der vorliegenden Erfindung sind nach verschiedenen Herstellungsverfahren von Hand oder maschinell hergestellte textile Flächengebilde, die aus einem Träger - auch Grundgewebe genannt - und einer für den Gebrauch wichtigen Polschicht bestehen und die überwiegend als Fußbodenbelag eingesetzt werden. Der Träger der Teppiche besteht aus einem vliesartigen, gewebeartigen oder gewirkeartigen Flächengebilde, in das Büschel oder Schlingen von Polgarnen eingebunden sind, die sich einseitig senkrecht über der Ebene des Trägermaterials erheben. Je nach der Art der Herstellung und der daraus resultierenden unterschiedlichen Art der Einbindung der Polgarne in den Träger, werden verschiedene Teppicharten unterschieden, z.B. Knüpfteppiche, die manuell oder maschinell hergestellt werden können, handgewebte oder maschinengewebte Teppiche, gewirkte Teppiche, z.B. Raschel- oder Kettwirk-Teppiche, getuftete Teppiche und Nadelvlieskonstruktionen. Allen diesen Teppichkonstruktionen ist gemeinsam, daß die Polfäden in den Träger - den sogenannten Teppichgrund - eingebunden sind und ihn durchsetzen, d.h. daß die Polgarne mit den Garnen des Trägers in einer aus der Herstellung resultierenden Gesetzmäßigkeit verschlungen sind. Diese Einbindung der Polgarne in den Träger führt zwar bereits zu einer Verankerung des Polmaterials im Träger, die aber in der Regel nicht ausreicht, um dem Teppichboden, die für den Dauergebrauch erforderliche Festigkeit, insbesondere die sogenannte Noppenfestigkeit, die den Widerstand der Polgarne gegen Herausziehen aus dem Träger kennzeichnet, zu gewährleisten. Es ist daher üblich, die genannten Teppichmaterialien von der Trägerseite her auszurüsten und/oder mit einer Rückenbeschichtung zu versehen, um die Gebrauchseigenschaften des Teppichs, insbesondere die Noppenfestigkeit, aber auch den Warengriff, den Notwendigkeiten des Dauergebrauchs und den Erwartungen des Anwenders anzupassen. Die Rückenbeschichtung dieser bekannten Teppichkonstruktionen erfolgt in der Regel durch einen Vorstrich mit geeigneten bekannten Latices, an den sich direkt entweder die Aufkaschierung eines Zweitrückens oder, nach einer Zwischentrocknung, eine Hauptbeschichtung, vorzugsweise ein Beschichtung mit einem geschäumten Latex anschließt.

In zunehmenden Maße werden Teppichkonstruktionen zur Innenausstattung von Fahrzeugen eingesetzt. Sie müssen auf diesem Anwendungssektor nicht nur dekorativ und/oder stoßabsorbierend sein, attraktive Griffeigenschaften haben und sicherheitstechnischen Aspekten Rechnung tragen, sondern es werden noch weiter zusätzliche Anforderungen gestellt wie geringe Heißlichtalterung, UV-Stabilität, Scheuerbeständigkeit guten Polstand und Wärmeformbeständigkeit.

Einige Beispiele aus der Preis für derartige Teppichkonstruktionen sind z. B. Fußraumabdeckung, Kofferraumauskleidung, Hutablagen, Säulen- und Türseitenverkleidungen.

Bekannte Teppichkonstruktionen enthalten, wie oben dargelegt, in der Regel für Pol, Träger und Beschichtung chemisch unterschiedliche Substanzgruppen. Sie sind daher nicht "artenrein" und können nicht oder nur nach umständlichen Trennoperationen recyclisiert werden.

Inzwischen ist aber die Entsorgung und das Recycling von Kunststoffteilen inbesondere im Automobilbereich zu einem zentralen Thema geworden. Viele Konzepte zur Wiederaufbereitung und Wiederverwertung von Kunststoffabfällen wurden bereits entwickelt. Probleme bereitet jedoch das Recyclisieren von Verbundsystemen, wie z.B. Synthesefaser-Teppichen, bei denen die Einzelkomponenten aus unterschiedlichen Polymeren bestehen. Unter diesem Aspekt wurden deshalb Konstruktionen angestrebt, die vollständig aus der gleichen Werkstoffsorte bestehen.

Die Einschränkung auf eine einzige Werkstoffsorte führte jedoch in der Regel zu einer Einschränkung der realisierbaren Kombination technischer Daten der daraus hergestellten Materialien.

Es wurde nun gefunden, daß man zu gut recyclisierbaren Teppichkonstruktionen aus Polfasern, Träger-und Verfestigungs-und Versteifungsschicht gelangen kann, die ein breites Spektrum vorteilhafter technischer Eigenschaften abdecken, wenn man als Kunststoffbasis Polyestermaterialien einsetzt und die Pol- und Trägerschicht mit der Verfestigungs- und Versteifungsschicht durch einen Schmelz- oder Schweißprozeß unlösbar verbindet.

Der erfindungsgemäße folienbeschichtete, recyclisierbare Teppichboden besteht somit aus einem Trägermaterial, einem darin eingebundenen Polgarn, einer Verfestigungs- und Versteifungsschicht und ggf. einem Zweitrücken und ist dadurch gekennzeichnet, daß das Polgarn, das Trägermaterial und ggf. der Zweitrücken aus Polyesterfasern bestehen, und daß er als Verfestigungs- und Versteifungsschicht eine Polyesterfolie von 0,04 bis 4,0 mm, vorzugsweise 0,1 bis 0,6 mm, insbesondere 0,15 bis 0,45 mm Dicke aufweist, die mit der mit ihr in Berührung stehenden Trägerschicht des Teppichs in der Berührungsfläche unlösbar verschmolzen oder verschweißt ist.

Wie bereits oben beschrieben, kann der Träger bei Web- und Raschelkettwirkteppichen als eine Grundkettschußkonstruktion aufgebaut sein, oder er kann bei Tufting-Teppichen und Nadelvlieskonstruktionen als ein eigenständiges Gewebe, Spunbond oder Vliesprodukt in die Gesamtkonstruktion eingebaut werden.

Besteht der Träger aus einem Gewebe oder einem gewebeanalogen Konstrukt, so weist er zweckmäßigerweise etwa 60 bis 150 Kettfäden und 80 bis 165 Schußfäden pro 10 cm auf. Andere Trägerkonstruktionen haben vorzugsweise eine entsprechende Fadendichte.

Ein als Gewebe oder Maschenware ausgebildeter Träger besteht aus Stapel- oder Endlosfasergarnen mit Garnstärken von Nm 6 bis Nm 20, vorzugsweise Nm 12 bis Nm 14. Für die Garne werden Fasern mit einem Titer von 3 bis 30 dtex und einer Stapellänge von 80 bis 150 mm verwendet. Bei Endlosgarnen liegt die Garnstärke im gleichen Bereich wie für Stapelfasergarne. Die Einzeltiter der Endlosgarne liegen ebenfalls zwischen 3 und 30 dtex.

Besonders bevorzugt sind erfindungsgemäße folienbeschichtete, recyclisierbare Teppiche, die einen permanent verformbaren Träger z.B. einen Träger mit Maschenkonstruktion aufweisen, wie sie beispielsweise durch eine Raschel- oder Kettwirktechnik erhalten werden. Derartige Maschenkonstruktionen weisen, wie alle Gestricke, eine konstruktionsbedingte hohe Deformierbarkeit und Dehnbarkeit auf, die besondere Vorteile bietet, wenn der erfindungsgemäße Teppich durch einen Formungsprozeß, z.B. durch Tiefziehen dreidimensional verformt werden soll, um beispielsweise eine Autotür-Innenverkleidung oder eine Ablage herzustellen.

Eine andere bevorzugte Ausführungsform weist einen Träger auf, der aus Polyestergarnen mit einer inhärenten hohen permanenten Dehnbarkeit, im Folgenden als "Dehngarn" bezeichnet, besteht. Derartige Garne lassen sich relativ leicht dehnen und behalten die dabei erhaltene neue Länge auch nach Wegfall der die Dehnung hervorrufenden Kraft bei. Garne mit solchen speziellen Dehnungseigenschaften und ihre Herstellung sind beispielsweise in der DE-C-35 21 479 beschrieben. Auch Teppiche mit einem solchen Träger lassen sich sehr gut permanent verformen.

Bei Einsatz eines solchen Dehngarns kann der Träger eines für die dreidimensionale Verformung vorgesehenen Teppichs eine Maschenkonstruktion haben, muß es aber nicht. Da die Dehnbarkeit hier dem Garn inhärent ist, können auch Gewebekonstruktionen oder vorzugsweise Vliesstoffe als Träger eines für die dreidimensionale Verformung vorgesehenen Teppichs eingesetzt werden.

Besonders bevorzugt sind Teppiche mit Tuftingkonstruktion, in denen der Träger ein Polyester-Vliesstoff oder ein Polyester-Gewebe, vorzugsweise mit einem Flächengewicht von 80 bis 120 g/m² ist.

Die Gewichtsanteile von Polmaterial, Träger und Folienauflage des erfindungsgemäßen recyclisierbaren Teppichbodens betragen etwa 150 bis 2000 g/m², vorzugsweise 400 bis 600 g/m², Polmaterial, 80 bis 200 g/m² Träger und 50 bis 5000 g/m², vorzugsweise 130 bis 800 g/m², insbesondere 200 bis 600 g/m², Folienschicht.

Als Zweitrücken, der ggf. auf den erfindungsgemäßen Teppich aufkaschiert sein kann, dient vorzugsweise ein Polyester-Vliesstoff mit einem Flächengewicht von 20 bis 450 g/m², insbesondere ein durch Nadeln, thermisch-autogen oder Polyester-Schmelzkleber verfestigter Vliesstoff aus Stapel- oder Endlosfasern mit einem Titer von 2,0 bis 30 dtex, vorzugsweise 3,0 bis 8,0 dtex, wie z.B. ein Spunbond.

Ein als Zweitrücken gut geeigneter Vliesstoff ist beispielsweise das die handelsübliche Spunbond-Type 001 der Firma Hoechst AG.

Als Polyestergrundstoff, aus dem die Stapel- oder Endlosfasergarne von Pol und Träger des erfindungsgemäßen recyclisierbaren Teppichs sowie die Filamente der eventuell darin enthaltenen Vliesstoffe bestehen, kommen im Prinzip alle zur Faserherstellung geeigneten bekannten Typen in Betracht. Derartige geeignete Polyester bestehen überwiegend, d.h. zu mehr als 75 mol%, aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist. Besonders vorteilhaft sind erfindungsgemäße Teppiche, deren Fasern aus einem Polyestermaterial bestehen, das zu mindestens 85 mol% aus Polyethylenterephthalat besteht. Die restlichen maximal 15 mol% bestehen aus Dicarbonsäureeinheiten und Glycoleinheiten, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure, Sulfogruppen enthaltende Dicarbonsäuren, wie z.B. 5-Sulfoisophthalsäure, die dem Polyester eine Affinität zu kationischen Farbstoffen vermitteln, und die flammhemmenden Co-Monomeren der Formel I: 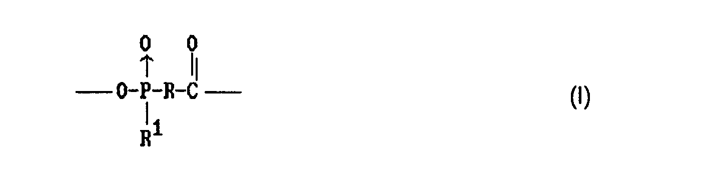
worin R Alkylen oder Polymethylen mit 2 bis 6 C-Atomen oder Phenyl und R¹ Alkyl mit 1 bis 6 C-Atomen, Aryl oder Aralkyl bedeutet, einkondensiert enthalten. Vorzugsweise bedeuten in der Formel I R Ethylen und R¹ Methyl, Ethyl, Phenyl, oder o-, m- oder p-Methylphenyl, insbesondere Methyl.

Eine besonders bevorzugte modifizierend wirkende aliphatische Dicarbonsäure ist Adipinsäure. Bevorzugte, modifizierungswirksame Zusatzmengen der aliphatischen Dicarbonsäure liegen im Bereich von 5-10 Gew.%.

Ist eine wirksame Flammschutzwirkung gewünscht, so beträgt die dem Faserrohstoff bzw. Fasern zugesetzte Menge an flammfestmachenden Mitteln der Formel I 0,1 bis 20 Gew.-%, vorzugsweise 2,5 bis 12 Gew.-%, bezogen auf das Gesamtgewicht der Fasern bzw. der Fäden.

Beispiele für modifizierend wirkende Diolreste sind Reste von längerkettigen Diolen, z.B. von Propandiol, Dimethylpropandiol oder Butandiol, von Di- oder Tri-ethylenglycol oder, sofern in geringer Menge vorhanden, von Polyglycol mit einem Molgewicht von ca. 500 - 2000.

Bevorzugt für die Polyestergarne des Teppichs und für die tragenden Filamente von darin enthaltenen Vliesstoffen sind unmodifiziertes Polyethylenterephthalat, während als Schmelzbinder, die zur Verfestigung der Vliesstoffe, bevorzugt in Form von Bindefasern, eingesetzt werden, Polyester mit abgesenktem Schmelzpunkt dienen. Diese bestehen zweckmäßigerweise aus modifiziertem Polyethylenterephthalat, beispielsweise polyethylenglykol-modifiziertem Polyethylenterephthalat oder aus Polybutylenterephthalat. Auch Filamente aus Polyethylenterephthalat, das mit dem oben genannten Co-Monomer der Formel I modifiziert ist, können mit Vorteil als Schmelzbindefaser eingesetzt werden.

Die in den Garnen der erfindungsgemäßen Teppiche enthaltenen Polyester haben vorzugsweise ein Molekulargewicht entsprechend einer intrinsischen Viskosität (IV), gemessen in einer Lösung von 1 Polymer in 100 ml Dichloressigsäure bei 25 _{°} C, von 0,7 bis 1,4.

Ein besonders bevorzugtes Teppichgarn, das mit besonderem Vorteil zur Herstellung des Pols und des Trägers des erfindungsgemäßen Teppichbodens eingesetzt werden kann, besteht beispielsweise aus einem Fasermaterial der Marke @Trevira, insbesondere der Marke @Trevira Type 824 der Firma Hoechst AG.

Ein Fasermaterial, das mit Phosphonsäuregruppen modifiziert ist und zur Herstellung flammhemmender Garne eingesetzt werden kann, wird unter dem Namen @Trevira CS von der Firma Hoechst AG in den Handel gebracht.

Als Polyestergrundstoff für die Verfestigungs- und Versteifungsfolie, die mit dem Träger des erfindungsgemäßen Teppichs verschmolzen oder verschweißt ist kommen im Prinzip die gleichen oben definierten Polyester in Betracht, aus denen auch die Fasern von Flor und Träger bestehen.

Besonders bevorzugt sind erfindungsgemäße Teppiche, bei denen die Verfestigungs- und Versteifungsfolie aus einem chemisch modifizierten Polyethylenterephthalat besteht, wie es vielfach für die Herstellung von streckgeblasenen Hohlkörpern eingesetzt wird. Die in diesem modifizierten Polyethylenterephthalat einkondensierten Modifizierungskomponenten, die im wesentlichen der Optimierung der Kristallisationscharakteristik dienen, können Säure- oder Diolkomponenten sein. Als modifizierende Säurekomponente hat sich in der Praxis die Isophthalsäure, vorzugsweise in Mengenanteilen von 0,5 bis 5 Gew.%, insbesondere 1 bis 2,5 Gew%, besonders bewährt. Bewährte Diolkomponenten sind Diethylenglycol, das zweckmäßigerweise in einem Mengenanteil von 0,5 bis 3 Gew.%, insbesondere 1 bis 2 Gew.% eingesetzt wird oder z.B. Bishydroxymethyl-cyclohexan, das üblicherweise in Mengenanteilen von 0,5 bis 5 Gew.%, vorzugsweise 1,5 bis 3 Gew.%, in dem Polyethylenterephthalat enthalten ist.

Auch Kombinationen von modifizierenden Säure- und Diolkomponenten können in dem Polyethylenterephthalat enthalten sein, wie z.B. 0,5 bis 2,5 Gew.%, vorzugsweise 1 bis 2 Gew.% Isophthalsäure und 0,5 bis 2,5, vorzugsweise 1 bis 2 Gew.% Diethylenglycol.

Der erfindungsgemäße folienbeschichtete, recyclisierbare Teppichboden kann selbstverständlich auch coloriert z.B. einfarbig gefärbt oder gemustert sein.

Dabei kann es von Vorteil sein, den Farbton des Trägers dem des Flormaterials anzupassen, d.h. einen in dunkleren Tönen gefärbten Träger einzusetzen, wenn auch der Flor ein dunkleres Design aufweist. Die Colorierung des Teppichs kann dabei nach allen bekannten Verfahren erfolgen. So kann der Teppich beispielsweise in der Haspelkufe bei Kochtemperatur mit oder, vorzugsweise, ohne Carrierzusatz gefärbt werden, es kann eine Kontinue-Färbung erfolgen, es kann unter Druck nach dem HT-Verfahren gefärbt werden oder eine für Teppichfärbung geeignete Ausführungsform des Thermosol-Verfahrens eingesetzt werden.

Gemusterte Teppiche können erhalten werden durch Bedrucken, Besprühen oder anderweitigen örtlichen Farbauftrag auf die Florseite des Teppichs und anschließende Fixierung des Farbstoffs. Die Fixierung der Farbstoffe erfolgt in Abhängigkeit von der Struktur der Farbstoffe und der Art des Polyesterrohstoffs der Fasern. Bei Polyestermaterialien, die Säuregruppen, z.B. Sulfonsäuregruppen, in der Polymerkette enthalten und Einsatz von kationischen Farbstoffen erfolgt die Fixierung bereits bei der Einwirkung einer heißen wässrigen Farbstoffzubereitung auf die Fasern, vermutlich durch Bindung der Farbstoffe an die Säuregruppen. Beim Einsatz von Dispersionsfarbstoffen und Polyestermaterialien, die keine Säuregruppen enthalten, erfolgt die Fixierung in der Regel durch eine Hitzebehandlung des mit der Farbstoffzubereitung in Kontakt gebrachten Färbegutes.

Die Herstellung colorierter Teppiche kann aber natürlich auch in der Weise erfolgen, daß man von vorgefärbten Pol- und/oder Trägergarnen ausgeht. Die Garnfärbung kann hierbei ebenfalls nach allen bekannten Methoden, insbesondere nach dem HT-Verfahren ausgeführt werden. Mit besonderem Vorteil können auch mit Pigmenten spinngefärbte Garne eingesetzt werden.

Die Recyclisierung der erfindungsgemäßen Teppiche durch Methanolyse wird durch eine Färbung des Polyestermaterials nicht oder nur unwesentlich beeinträchtigt. Eine Recyclisierung durch Regranulation führt bei colorierten Teppichen zu entsprechend gefärbtem Regranulat, das in Bereichen, in denen eine Färbung des Polymers keine Rolle spielt oder gar erwünscht ist, weiterverarbeitet werden kann.

Zur Erzielung besonderer Effekte kann der erfindungsgemäße Teppichboden im Flor und/oder im Träger Garne oder Filamente enthalten, die nicht aus Polyester bestehen, sofern diese in einer so geringen Menge vorhanden sind oder mit dem Polyestermaterial soweit kompatibel sind, daß sie die Recyclisierbarkeit des Teppichs nicht beeinträchtigen.

So ist es z.B. möglich, dem Flor- und/oder dem Trägergarn Kohlenstoffilamente beizumischen, um die elektrische Leitfähigkeit des Teppichs zu erhöhen.

Der erfindungsgemäße folienbeschichtete, recyclisierbare Teppichboden weist eine hohe Biegeelastizität auf und gestattet, sofern er einen verformbaren Träger enthält, die Herstellung formstabiler dreidimensional verformter Flächengebilde. Das Material hat im flachen oder dreidimensional verformten Zustand einen hohen Gebrauchswert durch ausgezeichnete Dimensionsstabilität, hohe Noppenfestigkeit und vorteilhaften Warengriff. Schmutzunempfindlichkeit bzw. gute Reinigungsfähigkeit, hohe Abriebfestigkeit, hohe Lichtechtheit durch Einsatz entsprechender Farbstoffe und Färberichtlinien, sowie gute Naß- und Trockenreibechtheit und damit verlängerte Austauschzeiten zeichnen den erfindungsgemäßen Teppichboden aus. Beim Austausch des Teppichbodens ergeben sich keine Probleme, denn der Teppich ist aufgrund seines Aufbaus aus artreinem Polyestermaterial einwandfrei recyclisierbar. Die Recyclisierung kann beispielsweise durch Methanolyse oder durch Regranulierung ausgeführt werden. Bei der Methanolyse werden - ggf. nach Abtrennung von Zusatzstoffen, wie z.B. Füll-, Mattierungs- und Farbstoffen - die zur Herstellung der Polyester erforderlichen monomeren Ausgangsmaterialien, nämlich die Methylester der Dicarbonsäurebausteine und die Diolkomponenten erhalten, destillativ getrennt und anschließend wieder zu neuen Polyestern kondensiert. Die Regranulierung führt in einem Schritt direkt zu einem wiederverspinnbaren Polyestermaterial.

Die vorliegende Erfindung betrifft auch ein Verfahren zur Herstellung eines folienbeschichteten, recyclisierbaren Teppichbodens, wobei zunächst nach einem der bekannten Knüpf-, Web-, Kettwirk-, Tufting- oder Nadelvliesverfahren unter Einsatz von Polyestergarnen ein unverfestigter Teppichboden aus einem Träger und darin eingebundenen Polgarnen hergestellt, sofern eine Veloursware hergestellt werden soll, geschoren und gegebenenfalls wie üblich coloriert wird, das dadurch gekennzeichnet ist, daß anschließend auf den Teppichträger rückseitig, d.h auf der dem Pol abgewandten Seite, eine auf eine Temperatur zwischen ihrer Schmelztemperatur T_{"} und (T s - 50) °C, vorzugsweise zwischen (T s - 15) und (T s - 30) °C, erwärmte Polyesterfolie von 0,04 bis 4,0 mm, vorzugsweise 0,1 bis 0,6 mm, insbesondere 0,15 bis 0,45 mm, Dicke aufgelegt und angedrückt wird.

Das Andrücken der Folie erfolgt zweckmäßigerweise mit einem Kalander, vorzugsweise einem Heizkalander, dessen Walzenabstand geringer ist als die Dicke des Teppichs und der, wie es beispielsweise von Kaschierverfahren her bekannt ist, so justiert ist, daß noch keine Schädigung des Flors eintritt aber eine gute Verbindung der Folie mit dem Teppichträger erfolgt.

Sofern eine besonders gute Verbindung zwischen dem Teppichrücken und der Folie gewünscht wird, kann der Teppich seinerseits auf eine Temperatur von 80 bis 150°C, vorzugsweise 130 bis 145°C vorgeheizt werden.

Als besonders zweckmäßig hat es sich ferner erwiesen, eine frisch extrudierte Folie, insbesondere eine direkt aus der Schlitzdüse austretende Folie, auf dem Teppichträger abzulegen und anzudrücken.

Das Andrücken der erhitzten Polyesterfolie an den Polyester-Teppichträger hat eine unlösbare Verbindung dieser Elemente zur Folge. Diese Verbindung dürfte durch Verschmelzen der Folie mit den Fasern des Teppichträgers oder durch einen Schweißvorgang, bei dem die Polyestermaterialien der Folie und der Trägerfasern auch unterhalb der Schmelzpunkte der beiden Materialien teilweise ineinander diffundieren, zustandekommen.

Nach dem Auftrag der Folie wird auf die noch heiße Folie gegebenenfalls noch ein Zweitrücken aufgelegt und, beispielsweise ebenfalls durch Kalandrieren, angedrückt.

Besonders bevorzugt sind solche Ausführungsformen der vorliegenden Erfindung, die eine Kombination mehrerer bevorzugter Merkmale aufweisen.

Das folgende Ausführungbeispiel veranschaulicht die Herstellung eines folienbeschichteten, recyclisierbaren erfindungsgemäßen Teppichbodens.

### Beispiel

Ein Kettwirkteppich, bestehend aus einem Trägergewirke aus unmodifizierten Polyethylenterephthalat-Filamenten mit einem Flächengewicht von 200 g/m², in das ein flockegefärbtes Polgarn aus Polyethylenterephthalat (@Trevira der Firma Hoechst AG) so eingewirkt und beschnitten ist, daß eine Polhöhe von 6 mm entsteht und der Gewichtsanteil der Polfasern am rohen getufteten Material 900 g/m² beträgt, wird mit abwärts gerichtetem Pol in einer Geschwindigkeit von 3 m/min im Abstand von 5 cm unter einer die ganze Breite der Teppichbahn überspannenden Schlitzdüse durchgeführt, aus der pro cm Breite 18 g/min einer 240 °C heißen Schmelze eines chemisch modifizierten Polyethylenterephthalats, wie es vielfach für die Herstellung von streckgeblasenen Hohlkörpern eingesetzt wird, extrudiert wird.

Als Modifizierungsmittel waren in dieses Polyethylenterephthalat 1,5 Gew.% Isophthalsäure und 2,5 Gew.% Bishydroxymethyl-cyclohexan einkondensiert.

Der so hergestellte Teppich hat eine die Verfestigung der Polfasern im Träger und eine Versteifung bewirkende Folienauflage von ca 0,5 mm Dicke. Er hat eine eine ausgezeichnete Noppenfestigkeit, und er kann durch Tiefziehen bei Temperaturen von 140 bis 180 _{°} C zu formstabilen dreidimensionalen Objekten verformt und durch Methanolyse oder durch Regranulation problemlos recyclisiert werden.

## Patentansprüche

1. Folienbeschichteter, recyclisierbarer Teppichboden bestehend aus einem Trägermaterial, einem darin eingebundenen Polgarn, einer Verfestigungs- und Versteifungsschicht und ggf. einem Zweitrücken, dadurch gekennzeichnet, daß das Polgarn, das Trägermaterial und ggf. der Zweitrücken aus Polyesterfasern bestehen, und daß er als Verfestigungs- und Versteifungsschicht eine Polyesterfolie von 0,04 bis 4,0 mm Dicke aufweist, die mit der mit ihr in Berührung stehenden Trägerschicht des Teppichs in der Berührungsfläche unlösbar verschmolzen oder verschweißt ist.

2. Folienbeschichteter, recyclisierbarer Teppichboden gemäß Anspruch 1, dadurch gekennzeichnet, daß er einen permanent verformbaren Träger aufweist.

3. Folienbeschichteter, recyclisierbarer Teppichboden gemäß mindestens einem der Ansprüche 1 und 2, dadurch gekennzeichnet, daß die Gewichtsanteile von Polmaterial, Träger und Folie des Teppichbodens etwa 150 bis 2000 g/m² Polmaterial, 80 bis 200 g/m² Träger und 50 bis 5000 g/m² Folie betragen.

4. Folienbeschichteter, recyclisierbarer Teppichboden gemäß mindestens einem der Ansprüche 1 bis 3, dadurch gekennzeichnet, daß der Träger eine Fadendichte entsprechend etwa 60 bis 150 Kettfäden und 80 bis 165 Schußfäden pro 10 cm aufweist.

5. Folienbeschichteter, recyclisierbarer Teppichboden gemäß mindestens einem der Ansprüche 1 bis 4, dadurch gekennzeichnet, daß die Verfestigungs- und Versteifungsfolie aus einem chemisch modifizierten Polyethylenterephthalat besteht, in das als modifizierende Säurekomponente Isophthalsäure, und als Diolkomponenten Diethylenglycol oder Bishydroxymethyl-cyclohexan einkondensiert ist.

6. Folienbeschichteter, recyclisierbarer Teppichboden gemäß mindestens einem der Ansprüche 1 bis 5, dadurch gekennzeichnet, daß er einen Zweitrücken aufweist, bestehend aus einem Polyester-Vliesstoff mit einem Flächengewicht von 20 bis 450 g/m², insbesondere einem durch Nadeln, thermisch-autogen oder Schmelzkleber verfestigten Vliesstoff aus Stapel- oder Endlosfasern mit einem Titer von 2,0 bis 30 dtex.

7. Folienbeschichteter, recyclisierbarer Teppichboden gemäß mindestens einem der Ansprüche 1 bis 6, dadurch gekennzeichnet, daß seine Fasern aus einem Polyestermaterial bestehen, das zu mindestens 85 mol% aus Polyethylenterephthalat besteht.

8. Verfahren zur Herstellung eines folienbeschichteten recyclisierbaren Teppichbodens, wobei zunächst nach einem der bekannten Knüpf-, Web-, Kettwirk-, Tufting- oder Nadelvliesverfahren ein unverfestigter Teppichboden aus einem Träger und darin eingebundenen Polgarnen hergestellt, sofern eine Veloursware hergestellt werden soll, geschoren und gegebenenfalls wie üblich gefärbt wird, dadurch gekennzeichnet, daß anschließend auf den Teppichträger rückseitig, d.h auf der dem Pol abgewandten Seite, eine auf eine Temperatur zwischen ihrer Schmelztemperatur Tₛ und (Tₛ - 50) °C, vorzugsweise zwischen (Tₛ - 15) und (Tₛ - 30) °C, erwärmte Polyesterfolie von 0,04 bis 4,0 mm Dicke aufgelegt und angedrückt wird und danach gegebenenfalls noch ein Zweitrücken aufgelegt und, beispielsweise durch Kalandrieren, an der Folie fixiert wird.

9. Verfahren gemäß Anspruch 8, dadurch gekennzeichnet, daß eine frisch extrudierte Folie, insbesondere eine direkt aus der Schlitzdüse austretende Folie, auf dem Teppichträger abgelegt und angedrückt wird.
